# EUROPEAN PATENT APPLICATION

(11) **EP 4 529 046 A1**
(43) Date of publication of application: **26.03.2025**
(21) Application number: 23275139.6
(22) Date of filing: 22.09.2023
(51) Int. Cl.: H04B 10/112, F41H 13/00

(54) **LASER DIRECTED ENERGY WEAPON FOR AN OPTICAL DATA LINK**

(71) Applicant: BAE SYSTEMS plc, London SW1Y 5AD (GB)
(72) Inventor: The designation of the inventor has not yet been filed
(74) Representative: BAE SYSTEMS plc Group IP Department

(57) **Abstract**

An apparatus 100 is configured to transmit an optical signal. The apparatus 100 comprises a first optical signal generator 102, configured to generate a first optical signal 106 comprising a first set of characteristics; a second optical signal generator 104, configured to generate a second optical signal 108 comprising a second set of characteristics; an adjustment unit 110, configured to adjust at least one of the different characteristics of at least one of the first and/or second optical signals 106, 108; and an optical signal combiner 116, configured to combine the first and second optical signals 106, 108 into a combined optical signal 118. The first and second sets of characteristics are different. Also described herein is an apparatus 200 configured to receiving an optical signal 202. The apparatus 200 comprises at least one sensor 204, configured to detect a combined optical data signal 202; and a processor 208. The processor 208 is configured to identify, from the combined optical signal 202, a first optical signal based on a first wavelength component; identify, from the combined optical signal, a second optical signal based on a second wavelength component; and extract data from the first optical signal based on the second optical signal. Also described herein is a method of transmitting 600 and a method of receiving 700 an optical signal, for example, using the transmitter and receiver apparatuses 100, 200.

## Description

### FIELD

The present invention relates to an apparatus and method for performing optical communication. More specifically, the present disclosure relates to the use of a laser-directed energy weapon (LDEW) apparatus for performing optical communication.

### BACKGROUND

High-power laser-directed energy weapons (LDEWs) are currently experiencing significant investment in development as a new form of armament. These systems utilise a plurality of laser signals arranged to focus on a single point in space, or target, to achieve power levels that are sufficient to be militarily applicable. In such arrangements, the combined energy deposition of the plurality of lasers may not be equal to the summed power of the plurality of lasers, due to phase differences between the individual laser signals. These phase mismatches can cause a combination of constructive and destructive interference along the beam extending between the laser sources and the target.

Several methods have been developed to combine laser beams more efficiently to prevent such reductions in energy deposition at the target resulting from said phase differences. Coherent beam combining is one such method, wherein the phase of each laser beam is adjusted until all the beams from a plurality of beams are in phase with each other.

LDEW systems share similar components and architectures to some optical communications systems that apply high-power lasers. These laser-based optical communications systems, when applied over long distances, can suffer from similar energy reduction issues as described above. This can lead to incomplete signal transmissions when using such optical data link systems.

The current invention seeks to address one or more of the technical problems associated with existing optical communication methods and systems.

### SUMMARY

The phase-changing properties of coherently combining laser beams, such as those used in LDEW applications, are herein applied to provide an improved optical data link.

According to a first aspect of the present invention, there is provided an apparatus for transmitting an optical signal. The apparatus comprises a first optical signal generator and a second optical signal generator. The first optical signal generator is configured to generate a first optical signal having a first set of characteristics. The second optical signal generator is configured to generate a second optical signal having a second set of characteristics. At least one characteristic from the first set of characteristics and the second set of characteristics is different. The apparatus further comprises an adjustment unit. The adjustment unit is configured to adjust at least one characteristic from at least one of the first and/or second sets of characteristics of the first and second optical signals. The apparatus comprises an optical signal combiner. The signal combiner is configured to combine the first and second optical signals into a combined optical signal for transmission.

Advantageously, this arrangement may be capable of generating and subsequently transmitting a combined optical signal formed of two individual optical signals which have different characteristics, wherein an aspect of the optical signals can be adjusted based on the requirements of the optical signals and/or combined optical signal.

According an embodiment of the present invention, at least two of the different characteristics of the first and second optical signals may be the phase and the wavelength of the respective optical signals. Advantageously, this arrangement may provide a combined optical signal having at least two distinctive optical signals that can be differentiated between.

According to another embodiment of the present invention, the adjustment unit may be configured to adjust the phase of at least one of the first and/or second optical signals. The phase of at least one of the first and/or second optical signals may be adjusted to provide a phase offset between the first and second optical signals. Advantageously, this arrangement may provide a combined optical signal that carries differentiable and phase-separated optical signals.

According to another embodiment of the present invention, the first optical signal may comprise a first wavelength. The first wavelength may be configured to provide a synchronising clock signal. Advantageously, this arrangement may enable the first optical signal to be utilised to delineate points in time at a rate based on its wavelength.

According to another embodiment of the present invention, the second optical signal may comprise a second wavelength. The second wavelength may be encoded to carry information. Advantageously, this arrangement may enable the second optical signal, and therefore the combined optical signal, to be used to transfer/send information.

According to another embodiment of the present invention, the first and second optical signals may be pulsed optical signals comprising a waveform having a series of stable and unstable levels. Advantageously, this arrangement may enable the first and second optical signals to be read or measured according to a rising and/or falling edge of the waveform based on whether the signal is at a stable or unstable level.

According to another embodiment of the present invention, the first and second optical signal generators may be laser generators, and the first and second optical signals may be laser signals. Advantageously, this may provide first and second optical signals, and a combined optical signal, having high beam directionality with minimal angular divergence. This arrangement may be further capable of providing an increased signal intensity within a narrow wavelength/frequency band that is capable of being detected over long distances.

According to another embodiment of the present invention, the apparatus may comprise at least one optical element. The at least one optical element may be configured to steer and/or focus the combined optical signal towards a target. Advantageously, this may increase the accuracy of the signal transmission and the resulting intensity of the optical signal that reaches the target/receiver, thereby improving the likelihood of successful signal transmission. This may further enable the combined optical signal to be directed toward a non-stationary target/receiver.

According to another embodiment of the present invention, the apparatus may comprise at least one additional optical signal generator. The at least one additional optical signal generator may be configured to generate at least one additional optical signal. The at least one additional optical signal may comprise a set of characteristics that are substantially the same as the second set of characteristics of the second optical signal. The second optical signal and at least one additional optical signal may be adjusted, by the adjustment unit, to be substantially in phase with each other. Advantageously, this may allow the intensity of the transmitted signal to be increased, thereby enabling optical signal transmission to be applied over larger distances.

According to a second aspect of the present invention, there is provided an apparatus for receiving an optical signal. The apparatus comprises at least one sensor, configured to detect a combined optical data signal and a processor. The processor is configured to identify, from the combined optical signal, a first component of the combined optical signal. The processor is further configured to identify, from the combined optical signal, a second optical signal based on a second component of the combined optical signal. The processor is further configured to extract data from the second optical signal based on the first optical signal.

Advantageously, this arrangement may be capable of receiving and extracting information from a combined optical signal formed of multiple optical signals which have differentiable characteristics.

According to another embodiment of the present invention, the first optical signal may comprise a first wavelength. The first wavelength may act as a synchronising clock signal. Advantageously, this arrangement may enable the first optical signal from the combined optical signal to delineate points in time at a rate based on its wavelength.

According to another embodiment of the present invention, the second optical signal may comprise a second wavelength. The second wavelength may be encoded to carry information. Advantageously, this may enable the combined optical signal to transfer information.

According to another embodiment of the present invention, the identified first and second optical signals may be pulsed optical signals comprising a waveform having a series of stable and unstable levels. Advantageously, this arrangement may enable the first and second optical signals to be read or measured according to a rising and/or falling edge of the waveform pattern, such as based on whether the waveform achieves a threshold value.

According to another embodiment of the present invention, the pulsed optical signals comprising a waveform having a series of stable and unstable levels may comprise a series of rising and falling edges. The rising and falling edges of the first optical signal may be configured to align with a stable level of the second optical signal. The stable level may refers to at least a portion of an optical signal having a specified threshold value. Advantageously, this arrangement may enable the first optical signal to be used as a synchronising clock signal capable of indicating when the second optical signal should be in order to obtain a stable data value. This arrangement may improve the likelihood of the correct signal being read.

According to a third aspect of the present invention, there is provided a method of transmitting an optical signal. The method comprises the step of generating a first optical signal comprising a first set of characteristics. The method further comprises the step of generating a second optical signal comprising a second set of characteristics. At least one characteristic from the first set of characteristics and the second set of characteristics is different. The method further comprises the step of adjusting at least one characteristic from at least one of the first and/or second set of characteristics of the first and second optical signals. The method further comprises the step of combining the first and second optical signals into a combined optical signal. The method further comprises the step of transmitting the combined optical signal.

Advantageously, this method may enable the generation and subsequent transmission of a combined optical signal formed of two individual optical signals which have different characteristics.

According to another embodiment of the present invention, the at least one different characteristic of the first and second optical signals may be the phase and the wavelength of the respective optical signals. Advantageously, this arrangement may provide a combined optical signal with two distinct optical signals that can be differentiated between.

According to another embodiment of the present invention, the different characteristics of the first and/or second optical signal that is adjusted may be the phase of the optical signal. The phases of the first and second optical signals may be adjusted to provide an offset between the phases of the two optical signals. Advantageously, this arrangement may provide a combined optical signal that carries differentiable and phase-separated optical signals. The optical signals comprised by the combined optical signal may therefore be more easily differentiable.

According to another embodiment of the present invention, the method may comprise the step of generating at least one additional optical signal. The at least one additional optical signal may have substantially the same characteristics as the first generated optical signal. Advantageously, this arrangement may allow the intensity of the transmitted signal to be increased, thereby enabling optical signal transmission to be applied over larger distances.

According to a fourth aspect of the present invention, there is provided a method of receiving an optical signal. The method comprises the step of receiving a combined optical signal. The method further comprises the step of identifying a first optical signal based on a first component of the combined optical signal. The method further comprises the step of identifying a second optical signal based on a second component of the combined optical signal. The method further comprises the step of extracting data from the second optical signal based on the first optical signal.

Advantageously, this method may be capable of receiving and extracting information from a combined optical signal formed of multiple optical signals which have differentiable characteristics.

According to another embodiment of the present invention, the first component of the first optical signal may be a first wavelength configured to be used as a synchronising clock signal. Advantageously, may enable the identified first optical signal from the combined optical signal to be used to delineate points in time at a rate based on its wavelength.

According to another embodiment of the present invention, the second component of the second optical signal may be a wavelength encoded to carry information. Advantageously, this may enable the combined optical signal to transfer information.

According to another embodiment of the present invention, the first optical signal may be configured to delineate a time point at which the second optical signal is to be read. Advantageously, this may enable the second optical signal that carries data, to be read at specific time points.

According to another embodiment of the present invention, the time point at which the first optical signal is to be measured may be configured to coincide with a stable level of the second optical signal. Advantageously, this arrangement may ensure that a stable data value is obtained from the second optical signal, thereby improving the likelihood of the correct signal being read.

### BRIEF DESCRIPTION OF THE FIGURES

Features and examples of the present disclosure will become apparent by reference to the following detailed description and drawings. For the sake of brevity, reference numerals or features having a previously described function may or may not be described in connection with other drawings in which they appear.

Embodiments of the invention will now be described by way of example only with reference to the figures, in which:
Figure 1 shows an optical communication apparatus according to the present invention;
Figure 2 shows an optical receiver apparatus according to the present invention; and
Figure 3a shows an example arrangement of optical signal generator elements;
Figure 3b shows another example arrangement of optical signal generator elements;
Figure 4 shows an example of first and second optical signal generated by the apparatus of the present invention.
Figure 5 shows a flowchart for a method of generating and transmitting a combined optical signal.
Figure 6 shows a flowchart for a method of receiving and analysing a combined optical signal.

### DETAILED DESCRIPTION

Hereinafter, various examples will be described with reference to the accompanying figures. The examples described below may be modified and implemented in various different forms. In order to more clearly describe features of the examples, detailed descriptions of matters well known to those skilled in the art to which the following examples belong will be omitted.

In the present disclosure, when an element is described as "connected" or "coupled" with another element, this includes not only "directly connected" or "directly coupled", but also "connected with another element therebetween" or "coupled with another element therebetween". In addition, when one element is described to "include" another element, this means that, unless specifically stated otherwise, the one element may further include other elements rather than excluding other elements.

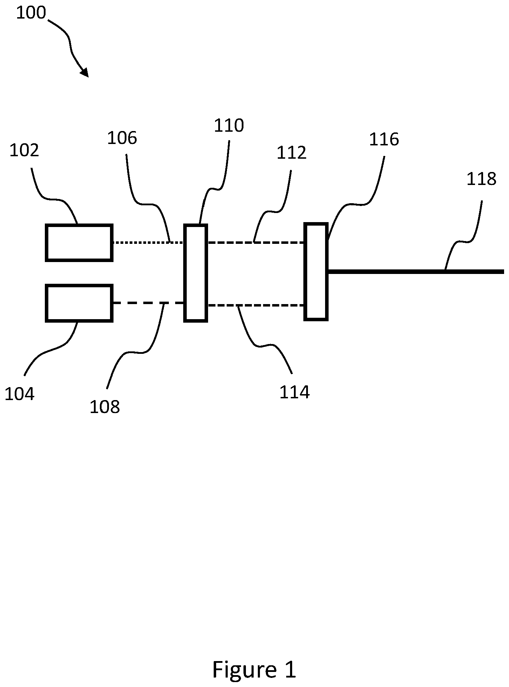

Figure 1 shows an apparatus 100 for transmitting an optical signal, as be used for the transmission of data using the methods described herein. The apparatus 100 may be fixed in a location. Alternatively, the apparatus may be attached to a vehicle to enable mobile optical signal transmission.

The apparatus 100 comprises a first optical signal generator 102. The first optical signal generator is configured to generate a first optical signal 106. The first optical signal 106 comprises a first set of characteristics.

The apparatus 100 further comprises a second optical signal generator 104. The second optical signal generator 104 is configured to generate a second optical signal 108. The second optical generator signal 108 comprises a second set of characteristics.

The first set of characteristics and second set of characteristics, as generated by the first and second optical signal generators 102, 104, are different.

The at least two different characteristics of the first and/or second optical signals may be the phase and the wavelength of the respective first and second optical signals 106, 108. In some embodiments, the characteristics may further include the frequency, amplitude, polarisation, and the like. The skilled person will appreciate that the term 'characteristics', as used herein, may be used to identify a specific property that may be used to differentiate the generated optical signal from another generated optical signal.

The first and second optical signal generators 102, 104 may be laser generators. In such an arrangement, the first and second optical signals 106, 108 may be laser signals. The laser generators may be gas lasers, solid-state lasers, fibre lasers, liquid lasers, semiconductor lasers, or the like. The generated laser signals or beams may have a wavelength within a narrow wavelength band. In other words, the generated laser beam may be substantially monochromatic. The generated laser beam may be coherent. In other words, the individual waves comprised by the laser beam may be in phase. The individual waves comprised by the laser beam may be collimated and exhibit low divergence over long distances. The first and second optical signal 106, 108 may be pulsed optical signals. The generation of the first and/or second optical signals 106, 108 maybe pulsed in a sequence configured to carry information or data.

In one embodiment, the first optical signal 106 may comprise a first wavelength that is configured to be used, provide, or otherwise represent a synchronising clock signal. In another embodiment, the second optical signal 108 may comprise a second wavelength that is encoded to carry information.

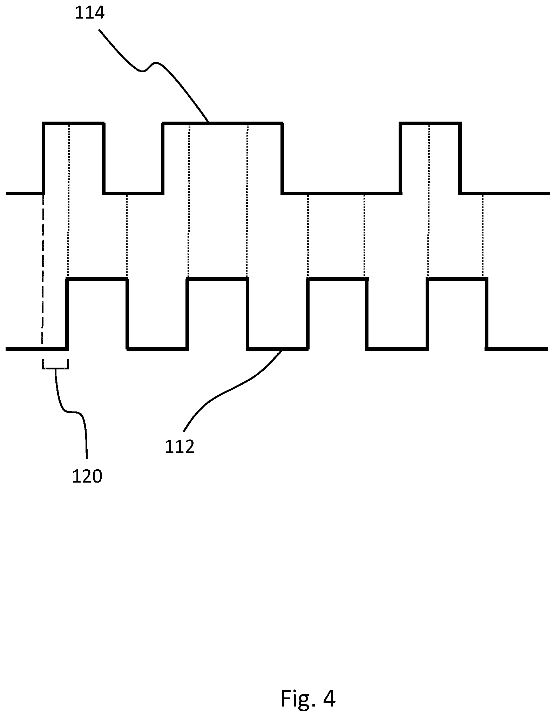

The pulsed first optical signal 106 may comprising a waveform having a series of stable and unstable levels. The pulsed second optical signal 108 may comprising a waveform having a series of stable and unstable levels. The skilled person will appreciate that various waveforms may be used to provide said stable or unstable levels, thereby achieving the same or a substantially similar result. Figures 4 illustrates an example wherein the pulsed first optical signal 106 utilises a substantially square profile wave sequence comprising a series of rising and falling edges. The pulsed second optical signal 108 may also be configured to generate a substantially square profile wave sequence comprising a series of rising and falling edges. The rising and falling edges of the first optical signal 106 may be configured to align with a stable level of the pulsed second optical signal 108. As used here, a 'stable level' of the pulsed second optical signal is a position in the pulsed second waveform located between a rising and falling edge, where the generated signal is substantially constant.

The apparatus 100 further comprises an adjustment unit 110. The adjustment unit 110 is configured to adjust (such as shift, regulate, tune, alter, or otherwise change) at least one of the first and/or second characteristics from the first and second optical signals 106, 108. The adjustment unit 110 may be variable to ensure that the first and second optical wavelengths, whilst always being offset, are offset by a near-constant margin. This may allow any variation in the generation of either of the optical signals wavelengths to be compensated for.

The adjustment unit 110 may output an adjusted first optical signal 112. The adjustment unit 110 may further output an adjusted second optical signal 114. At least one of the characteristics of the adjusted first optical signal 112 may differ to those of the first optical signal 106 as generated by the second optical signal generator 106. At least one of the characteristics of the adjusted second optical signal 114 may differ to those of the second optical signal 108 as generated by the second optical signal generator 108. The adjustment unit 110 may comprise at least one optical element configured to alter a characteristic of the generated first and/or second optical signal 106, 108.

The adjustment unit 110 may be configured to adjust the phase of at least one of the first and second optical signals 106, 108. As shown in Figure 4, the adjustment unit 110 may provide a phase offset 120 between the adjusted first and second optical signals 114, 116.

The adjustment unit 110 may comprise at least one optical element, comprising a refractive index that is operable to apply a phase change to at least one of the generated optical signals 106, 108 to provide an adjusted first and/or second optical signal 112, 116 with a phase that is substantially different to the phase of the generated first and/or second 106, 108.

The apparatus 100 further comprises an optical signal combiner 116. The optical signal combiner 116 is configured to combine the first and second optical signals 106, 108 into a combined optical signal 118 for transmission. The optical signal combiner 116 may combine the adjusted first and/or adjusted second optical signals 112, 114 to generate the combined optical signal 118 for transmission. The optical signal combiner 116 may be a dichroic beam combiner.

The apparatus 100 may further comprise at least one optical element (not shown). The at least one optical element may be configured to steer, focus, or otherwise direct the combined optical signal 118 toward a target. For example, the target may be a receiver apparatus 200. This may enable the apparatus to direct transmission of the combined optical signal 118 toward a non-stationary target/receiver 200.

In some embodiments, the apparatus 100 may comprise at least one additional optical signal generator. The at least one additional optical signal generator may be a laser. The at least one additional optical signal generator may be configured to generate at least one additional optical signal. The at least one additional optical signal may comprise a set of characteristics that are the same, or substantially the same, as the second set of characteristics of the second optical signal. In other words, the at least one additional optical signal may comprise the same wavelength, frequency, phase, amplitude, polarisation, or the like, as the second optical signal. Where the at least one additional optical signal is generated, the adjustment unit 110 may be configured to adjust (such as shift, regulate, tune, later, or otherwise change) the second optical signal 108 and the at least one additional optical signal to have the same, or substantially the same, phase. As such, the second optical signal 108 and at least one additional optical signal may be provided with the same, or substantially the same, phase offset 120 relative to the first optical signal 106. The amount of offset 120 applied by the adjustment unit 110 may be a predetermined or pre-set.

In some embodiments, as more optical signals are combined, multiple data links may be established. For example, if 64 separate optical signals were to be combined, 32 of these may be used for a first application e.g., as a synchronising clock signal, and the remaining 32 optical signals maybe encoded to carry data or information. Of course, this could be applied using any number of optical signals. An even number of optical signals may be preferrable such that each clock signal is synchronised with a data signal. However, an odd number of signals may also be used. In such cases, a single synchronising clock signal may be used in conjunction with multiple data signals. Such an arrangement may provide increased data transfer rates and/or provide redundancy to the overall optical link between a transmitter and receiver. In some cases, multiple characteristics of the individual optical signals may be used to further aid differentiation between optical signals within a combined optical signal 118 to enable a single combined optical signal 118 to transfer multiple data signals, for example, wavelength, frequency, phase, amplitude, polarisation, or a combination thereof.

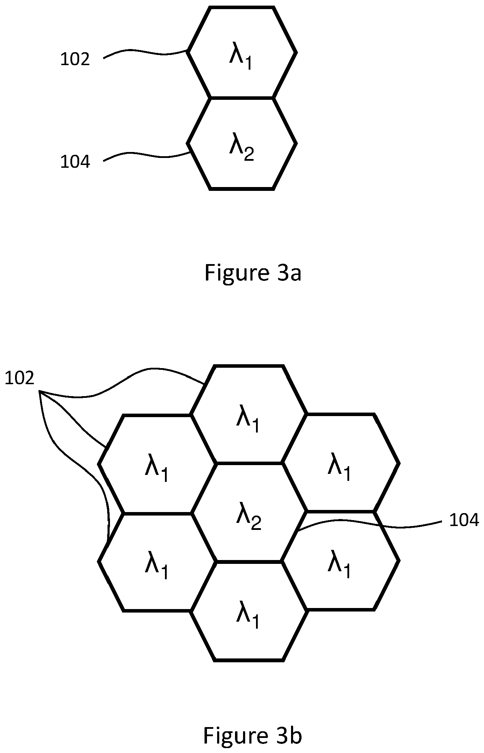

As shown in Figure 3a, the optical signal generators 102, 104 may comprise a substantially hexagonal, such as regular hexagonal, shape and/or cross-section. The hexagonal optical signal generators may be arranged in a tessellating or honeycomb pattern to form a series of concentric rings comprising hexagonal elements, as shown in Figure 3b. This arrangement may be operable to maximise the spatial packing efficiency in arrangements comprising a plurality of optical signal generators. The skilled person will appreciate that, although Figure 3b shows an arrangement comprising seven individual optical signal generator elements, the apparatus 100 may comprise more or fewer, depending on the application or conditions.

In some arrangements, a plurality of optical signal generators, each producing an optical signal with characteristics matching the second optical signal. This arrangement may provide a combined optical signal 118 having a higher signal intensity. This may be useful in situations where signal transmission between a transmitter and receiver is inhibited or at least partially obscured, for example, due to bad weather or atmospheric effects.

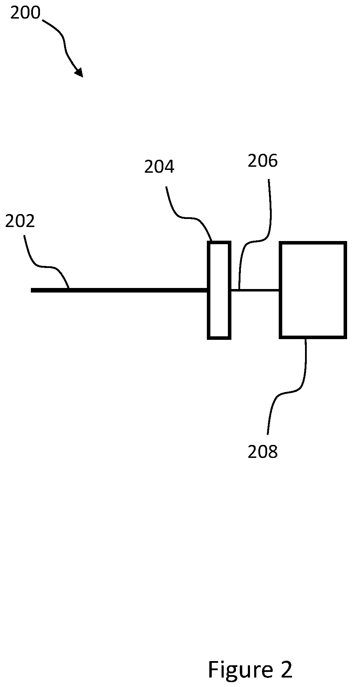

Figure 2 shows an apparatus for receiving an optical signal 202. The apparatus 200 may be configured to receive a combined optical signal, such as the combined optical signal 118 generated by the apparatus 100. This arrangement may enable optical communication and/or data transfer between the apparatus 100 for transmitting an optical signal and the apparatus 200 for receiving an optical signal.

The apparatus 200 comprises at least one sensor 204. The at least one sensor 204 is configured to detect a combined optical signal 202, such as the combined optical signal 118, 220 generated by the apparatus 100 for transmitting an optical signal. The at least one sensor 204 may be tuned to detect optical signals within a specified characteristic band. For example, the at least one sensor 204 may be configured to detect optical signals in a specific wavelength band. The at least one sensor 204 may comprise an electro-optical element that is configured to generate an electrical signal 206 based on a sensed optical signal 202, such as the received combined optical signal 202. The electro-optical element may be configured to generate an electrical signal 206 based on at least one characteristic of the received optical signal 202, such as the wavelength, frequency, phase, amplitude, polarisation, and the like. The skilled person will appreciate that the generated electrical signal 206 may be generated based on other properties of the received optical signal 202.

The apparatus 200 further comprises a processor 208. The processor may be configured to execute instructions of a program in a memory (not shown). The memory may be, for example, a read only memory (ROM), a random-access memory (RAM), and the like. The processor 208 may be configured to execute instructions of programs loaded in the memory. For example, the processor may be configured to analyse and/or interpret the information electrical signal by the sensor 204.

The processor 208 is configured to identify, from the combined optical signal 202, a first optical signal based on a first component. The component may be, for example, at least one characteristic such as wavelength, amplitude, frequency, polarisation, phase, or the like. The processor 208 is further configured to identify, from the combined optical signal 202, a second optical signal based on a second component. The component may be, for example, at least one characteristic such as wavelength, amplitude, frequency, polarisation, phase, or the like. The processor is further configured to extract information from the second optical signal based on the first optical signal. In other words, the information obtained from the first optical signal may determine how to extract information from the second optical signal.

The received combined optical signal 202 may be a laser signal. The received combined optical signal 202 may comprise a combination of a first optical signal 106 and second optical signal 108, wherein the first and second optical signals 106, 108 may be pulsed optical signals. The generation of the first and/or second optical signals 106, 108 maybe pulsed in a sequence configured to carry information or data.

The first optical signal, as identified based on a first wavelength component, may be configured to be used as a synchronising clock signal. The second optical signal, as identified based on a second wavelength component, may be encoded to carry information. The identified first and second optical signals may be pulsed optical signals.

The pulsed first optical signal 106 may comprising a waveform having a series of stable and unstable levels. The pulsed second optical signal 108 may comprising a waveform having a series of stable and unstable levels. The skilled person will appreciate that various waveforms may be used to provide said stable or unstable levels, thereby achieving the same or a substantially similar result. Figures 4 an example wherein the pulsed first and second optical signals that form the combined optical signal 202 may be configured to generate a substantially square profile wave sequence comprising a series of rising and falling edges. Each of the pulsed optical signals that make up the combined optical signal 202 may comprise square wave waveform. As such, the combined optical signal may comprise a series of rising and falling edges. The rising and falling edges of the first optical signal 106 may be configured to align with a stable level of the pulsed second optical signal 108. As used here, a 'stable level' of the pulsed second optical signal is a position in the pulsed second waveform located between a rising and falling edge, where the generated signal is substantially constant. The square profile sequence of the first and/or second optical signals may be translated, by the processor 210, into a digital signal comprising a series of 0s and 1s. In some embodiments, a stable level may refer to at least a portion of an optical signal having a characteristic that meets a threshold requirement. For example, a stable level may be interpreted as a point at which an amplitude of at least one of the optical signals is above a certain threshold value. A stable level may refer to a threshold level being reached. Such arrangements may enable other wave profiles to be used, whilst still enabling differentiation between stable and unstable levels. The stable and unstable values of the first and/or second optical signals may be translated, by the processor 210, into a digital signal comprising a series of 0s and 1s.

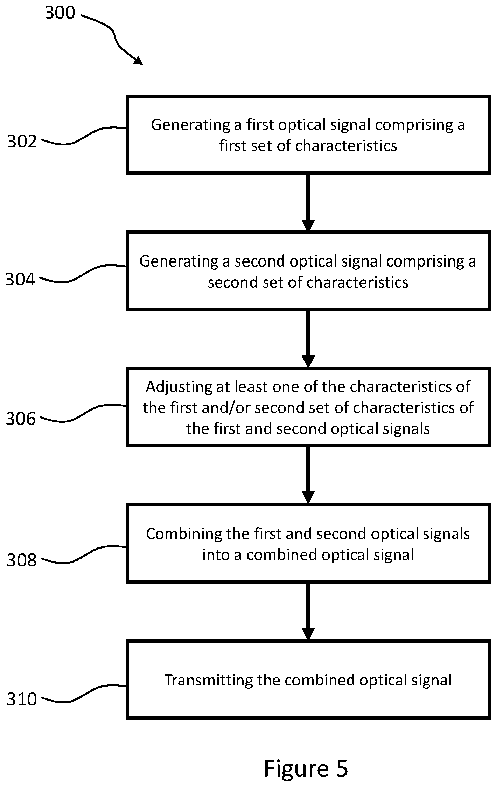

Figure 5 illustrates method 300 of generating and subsequently transmitting a combined optical signal. The method 300 may be compatible with the apparatus 100 for transmitting an optical signal.

The method 300 includes the step 302 of generating a first optical signal. The first optical signal comprises a first set of characteristics. The method 300 further includes the step 304 of generating a second optical signal.

The second optical signal comprises a second set of characteristics. At least one characteristic from the first set of characteristics and the second set of characteristics is different. At least two of the different characteristics of the first and second optical signals may be the phase and the wavelength of the respective optical signals. The characteristics may further include the wavelength, phase, frequency, amplitude, polarity, and the like.

The method 300 further includes the step 306 of adjusting at least one characteristic from at least one of the first and/or second set of characteristics of the first and second optical signals. The phases of at least one of the first and/or second optical signals may be adjusted to provide an offset 120 between the phases of the first and second optical signals. The amount of offset 120 applied to the phase of at least one of the first and/or second optical signals may be a predetermined or pre-set.

The method 300 further includes the step 308 of combining the first and second optical signals into a combined optical signal. The first and second optical signals may be combined by passing the optical signals through a dichroic beam combiner.

The method 300 further includes the step 310 of transmitting the combined optical signal. The method 300 may further include steps to focus and/or steer the combined optical signal toward a target. The target may be an apparatus 200 for receiving an optical signal.

The method 300 may further include the step of generating additional optical signals, such as at least one additional optical signal. The at least one additional optical signal may have the same, or substantially the same, characteristics as the second optical signal. At least one additional optical signal may be adjusted, as described in relation to step 306, to provide the same, or substantially the same, offset 120 as the second optical signal, relative to the first optical signal.

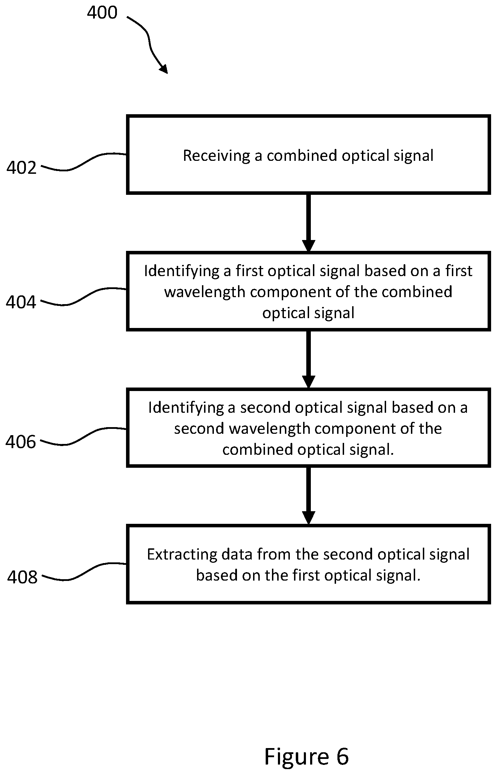

Figure 6 illustrates method 400 of receiving an optical signal and subsequently extracting data carried therein. The method 400 may be compatible with the apparatus 200 for receiving an optical signal.

The method 400 includes the step 402 of receiving a combined optical signal. The combined optical signal may be formed of at least two separate optical signals that have been combined into a single optical signal or beam. The combined optical signal may be received by at least one sensor. The at least one sensor may be tuned to detect optical signals within a specified band. For example, the at least one sensor may be configured to detect optical signals in a specific wavelength band. The at least one sensor may comprise an electro-optical element that is configured to generate an electrical signal based on a sensed optical signal, such as the received combined optical signal. The electro-optical element may be configured to generate an electrical signal based on at least one characteristic of the received optical signal, such as the wavelength, frequency, phase, amplitude, polarisation, and the like. The skilled person will appreciate that the generated electrical signal may be generated based on other properties of the received optical signal. The electrical signal information generated by the at least one sensor may be subsequently used to identify components of the combined optical signal.

The method 400 further includes the step 404 of identifying a first optical signal based on a first component of the received combined optical signal. The component may be, for example, at least one of a characteristic such as wavelength, amplitude, frequency, polarisation, phase, or the like, In some examples, the at least one sensor may detect a first wavelength, or a specific wavelength band, from the combined optical signal. This first wavelength may then be used to identify and/or isolate the first optical signal from the combined optical signal.

The method 400 further includes the step 406 of identifying a second optical signal based on a second component of the received combined optical signal. The component may be, for example, at least one characteristic such as wavelength, amplitude, frequency, polarisation, phase, or the like, In some examples, the at least one sensor may detect a second wavelength, or a specific wavelength band, from the combined optical signal. This second wavelength may then be used to identify and/or isolate the second optical signal from the combined optical signal.

Steps 404 and 406 may be performed a plurality of times until all wavelength components of the combined optical signal have been identified, and the associated optical signal components have been identified and/or isolated/extracted from the combined optical signal.

The method 400 further includes the step 408 of extracting information from the second optical signal based on the first optical signal. The first optical signal, as identified based on a first wavelength component in step 404, may be used as a synchronising clock signal. The synchronising clock signal may be operable to delineate a point in time at which the second optical signal is to be measured.

The second optical signal, as identified based on a second wavelength component in step 404, may be encoded to carry information. As such, the first optical signal may indicate when the information contained by the second optical signal is to be read, measured, or otherwise evaluated. The first and second optical signals are aligned such that the synchronising clock signal of the first optical signal aligns with that the second optical signal at a point in time where the second optical signal is at a stable level. In other words, the first optical signal delineates a point in time where the second optical signal is not at or close to a rising or falling edge of a square wave, or of another suitable waveform comprising stable and unstable levels.

Reference in the specification to "an example", "an embodiment", "an aspect" or similar language means that a particular feature, structure, or characteristic described in connection with the example is included in at least one example, but not necessarily in other examples. The various instances of the phrase "in one example" or similar phrases in various places in the specification are not necessarily all referring to the same example. In describing and claiming examples disclosed herein, the singular forms "a", "an", and "the" include plural references unless the context clearly dictates otherwise.

While several examples have been described in detail, it is to be understood that the disclosed examples may be modified. Therefore, the foregoing description is to be considered non-limiting. It should be understood that the examples described herein should be considered in a descriptive sense only and not for purposes of limitation. Descriptions of features or aspects within each example should typically be considered as available for other similar features or aspects in other examples. While one or more examples have been described with reference to the figures, it will be understood by those of ordinary skill in the art that various changes in form and details may be made.

## Claims

1. An apparatus (100) for transmitting an optical signal, comprising:
a first optical signal generator (102), configured to generate a first optical signal (106) having a first set of characteristics;
a second optical signal generator (104), configured to generate a second optical signal (108) having a second set of characteristics;
wherein at least one characteristic from the first set of characteristics and the second set of characteristics is different;
an adjustment unit (110), configured to adjust at least one characteristic from at least one of the first and/or second set of characteristics of the first and second optical signals; and
an optical signal combiner (116), configured to combine the first and second optical signals into a combined optical signal (118) for transmission.

2. The apparatus of claim 1, wherein at least two of the different characteristics of the first and second optical signals are selected from phase, wavelength and polarisation of the respective optical signals.

3. The apparatus of claim 2, wherein the adjustment unit is configured to adjust the phase of at least one of the first and/or second optical signals to provide a phase offset (120) between the first and second optical signals.

4. The apparatus of any preceding claim, wherein the first optical signal comprises a first wavelength that is configured to be used as a synchronising clock signal.

5. The apparatus any preceding claim, wherein the second optical signal comprises a second wavelength that is encoded to carry information.

6. The apparatus of any preceding claim, wherein first and second optical signals are pulsed optical signals comprising a waveform having a series of stable and unstable levels.

7. The apparatus of any preceding claim, wherein the first and second optical signal generators are laser generators,
wherein the first and second optical signals are laser signals.

8. The apparatus of any preceding claim, further comprising at least one additional optical signal generator, configured to generate at least one additional optical signal.

9. An apparatus (200) for receiving an optical signal, comprising:
at least one sensor (204), configured to detect a combined optical data signal (202); and
a processor (208), configured to:
identify, from the combined optical signal, a first optical signal based on a first component of the combined optical signal,
identify, from the combined optical signal, a second optical signal based on a second component of the combined optical signal,
extract information from the second optical signal based on the first optical signal.

10. The apparatus of claim 9, wherein the first optical signal comprises a first wavelength and is configured to be used as a synchronising clock signal.

11. The apparatus of claim 9 or 10, wherein the second optical signal comprises a second wavelength and is encoded to carry information.

12. The apparatus of any of claims 9-11, wherein the identified first and second optical signals are pulsed optical signals comprising a waveform having a series of stable and unstable levels.

13. The apparatus of claim 12, wherein the rising and falling edges of the first optical signal are configured to align with a stable level of the second optical signal, wherein the stable level refers to at least a portion of an optical signal having a specified threshold value.

14. A method (300) for transmitting an optical signal, comprising:
generating a first optical signal, comprising a first set of characteristics (302);
generating a second optical signal, comprising a second set of characteristics (304);
wherein at least one characteristic from the first set of characteristics and the second set of characteristics is different;
adjusting at least one characteristic from at least one of the first and/or second set of characteristics of the first and second optical signals (306);
combining the first and second optical signals into a combined optical signal (308); and
transmitting the combined optical signal (310).

15. A method (400) of receiving an optical signal, comprising:
receiving a combined optical signal (402);
identifying a first optical signal based on a first component of the combined optical signal (404);
identifying a second optical signal based on a second component of the combined optical signal (406);
extracting information from the second optical signal based on the first optical signal (408).
